# EUROPÄISCHE PATENTANMELDUNG

(11) **EP 1 895 215 A2**
(43) Veröffentlichungstag der Anmeldung: **05.03.2008**
(21) Anmeldenummer: 07013656.9
(22) Anmeldetag: 12.07.2007
(51) Int. Cl.: F16K 27/02

(54) **Ventilgehäuse zum Teil aus Kunststoff und Ventil mit einem solchen Ventilgehäuse**

(30) Priorität: 30.08.2006 DE 102006040716
(71) Anmelder: Honeywell Technologies Sarl, 1110 Morges (CH)
(72) Erfinder: Motta, Adriano, 20131 Milano (IT)
(74) Vertreter: Graefe, Jörg

(57) **Zusammenfassung**

Die vorliegende Erfindung betrifft ein Ventilgehäuse (1) für ein Ventil, insbesondere für ein Thermostatventil, wobei dass Ventilgehäuse (1) einen Anteil (2) aus Metall und einen Anteil (3) aus Kunststoff umfasst.

## Beschreibung

Die Erfindung betrifft ein Ventilgehäuse für ein Ventil, insbesondere für ein Thermostatventil sowie ein Ventil mit einem solchen Ventilgehäuse.

Ventilgehäuse, insbesondere für Thermostatventile sind aus dem täglichen Leben bekannt. Die Ventilgehäuse stellen eine Leitungsverbindung zwischen dem Leitungsnetz in einem Haus und einem Heizkörper her. Die Ventilgehäuse, die aus dem Stand der Technik bekannt sind, sind dabei überwiegend aus Metall hergestellt. Metall, insbesondere Messing hat sich als besonders vorteilhaft für die Herstellung von vielen Ventilgehäusen erwiesen, da Metall über eine ausreichende Druckfestigkeit und Belastbarkeit verfügt. Die Ventilgehäuse sind im täglichen Einsatz zum Teil erheblichen Temperaturschwankungen und Druckbelastungen ausgesetzt.

Die fast ausschließliche Verwendung von Metall für die Herstellung von Ventilgehäusen hat jedoch mehrere Nachteile. Insbesondere in Zeiten knapper werdender Rohstoffe und einer starken Verteuerung von Rohstoffen treiben die hohen Preise für das Metall die Preise für die Ventile in die Höhe. Ein weiterer Grund ist, dass das Design von Ventilgehäusen stark eingeschränkt ist. Das Design der Ventilgehäuse orientiert sich derzeit im Wesentlichen an rein praktischen Aspekten. Ästhetische Aspekte spielen bei dem Design der heutigen Ventilgehäuse praktisch keine Rolle.

In jüngerer Zeit sind dagegen verstärkt Heizkörper auf den Markt gekommen, die den besonderen Anforderungen an das Design genügen. Insbesondere in Badezimmern werden zum Teil sehr aufwändig gestaltete Heizkörper verwendet. Unbefriedigend ist jedoch die Anbindung der Heizkörper an das Leitungsnetz des Hauses über die herkömmlichen Ventile. Während bei den Ventiloberteilen schon ein vielfältiges Design bekannt ist, wird man für das Ventilgehäuse auf die seit Jahrzehnten üblichen Bauformen beschränkt.

Hier setzt die vorliegende Erfindung an.

Der Erfindung liegt zum einen die Aufgabe zugrunde, den Metallanteil in Ventilgehäusen zu minimieren, um so den Preis für ein Ventilgehäuse zu senken, und andererseits die Möglichkeiten für ein vielfältiges Design von Ventilgehäusen zu erhöhen,

Diese Aufgaben werden durch ein Ventilgehäuse nach Anspruch 1 gelöst. Demnach weist das Ventilgehäuse einen Anteil aus Metall und einen Anteil aus Kunststoff auf.

Durch die Reduzierung des Metallanteils in dem erfindungsgemäßen Ventilgehäuse gegenüber einem herkömmlichen Ventilgehäuse kann eine Kostenreduzierung erreicht werden. Andererseits können die positiven Eigenschaften des Metalls hinsichtlich der Festigkeit insbesondere auch für Verbindungselemente genutzt werden, wo dieses gewünscht oder auch notwendig ist. Durch die Verwendung des Kunststoffs als weiteren Anteil des Ventilgehäuses ist es möglich, eine Vielzahl von Formen des Ventilgehäuses auf preisgünstige Art und Weise herzustellen. Insbesondere kann auch eine Vielzahl von Farben eingesetzt werden, um den Kunststoff einzufärben und dem gesamten Ventilgehäuse durch den eingefärbten Kunststoff ein individuelles Aussehen zu geben.

Gemäß der Erfindung kann der Metallanteil des Ventilgehäuses einteilig sein. Es ist dabei insbesondere möglich, dass der Metallanteil des Ventilgehäuses einen Kern bildet, der von dem Kunststoffanteil umschlossen wird.

Ebenso ist es möglich, dass der Metallanteil in mehreren Teilen in dem Ventilgehäuse vorgesehen ist. Diese verschiedenen Teile des Metallanteils können aus dem gleichen Metall oder aber aus verschiedenen Metallen hergestellt sein. Ebenso ist es möglich, dass jeder Teil des Metallanteils aus einer oder mehreren verschiedenen Metallphasen gebildet wird.

Auch der Kunststoffteil des Ventilgehäuses kann einteilig oder mehrteilig ausgebildet sein. Sofern mehrere Kunststoffteile vorgesehen sind, können diese aus dem gleichen Kunststoff oder aber aus verschiedenen Kunststoffen hergestellt sein. Ebenso ist es möglich, dass ein oder mehrere verschiedene Kunststoffteile aus einer oder mehreren Kunststoffkomponenten bestehen. Die Kunststoffkomponenten können so miteinander kombiniert werden, dass Stoffe mit für den Bereich des Ventilgehäuses optimalen Eigenschaften eingesetzt werden. So ist es beispielsweise möglich, dass in den Bereichen, in denen Dichtungen notwendig sind, ein weicher Kunststoff verwendet wird, so dass zusätzliche Dichtungsringe entfallen können.

Die verschiedenen Kunststoffteile können unterschiedlich eingefärbt sein. Ebenso ist es möglich, dass ein oder mehrere Kunststoffteile ganz oder zum Teil transparent sind. Es ist dann möglich, das Ventilgehäuse durchfließende Medien zu beobachten.

Ferner ist es möglich, dass der Kunststoff Farbwechseleigenschaften hat, die von der Temperatur abhängen. So kann das Ventilgehäuse unterschiedliche Farben in Abhängigkeit von der Temperatur des durchfließenden Mediums oder gegebenenfalls des umgebenen Mediums haben. Ebenso ist es denkbar, dass der Kunststoff je nach der Temperatur der Umgebung oder des durchfließenden Mediums transparent oder intransparent ist.

Die Metallteile beziehungsweise der Metallanteil eines erfindungsgemäßen Ventilgehäuses können insbesondere Gewinde und andere Verbindungselemente sowie den Ventilsitz umfassen.

In dem Anteil aus Metall können Strukturen vorgesehen sein, welche eine sichere Verbindung zwischen dem Kunststoffanteil und dem Metallanteil gewährleisten. Denkbar ist, beispielsweise, dass diese Strukturen des Metallanteils vom Kunststoffanteil hintergriffen werden. Dieses ist beispielsweise durch Anspritzen des Kunststoffes möglich.

Ferner ist denkbar, dass der Kunststoff faserverstärkt ist, um eine höhere Festigkeit, insbesondere Druckfestigkeit des Kunststoffs zu erreichen.

Ausführungsbeispiele für erfindungsgemäße Ventilgehäuse und erfindungsgemäße Ventile sind anhand der Zeichnungen näher beschrieben. Es zeigt
- Fig. 1: ein erstes erfindungsgemäßes Ventilgehäuse mit einem einstückigen Kunststoffanteil und einem einstückigen Metallanteil,
- Fig. 2: ein Ventil mit dem erfindungsgemäßen ersten Ventilgehäuse,
- Fig. 3: ein Ventilgehäuse mit einem Teil aus Kunststoff und drei Teilen aus Metall,
- Fig. 4: ein Ventil mit dem zweiten Ventilgehäuse gemäß Fig. 3,
- Fig. 5 bis Fig. 7: Varianten der Ventile gemäß der Figuren 2 und 4.

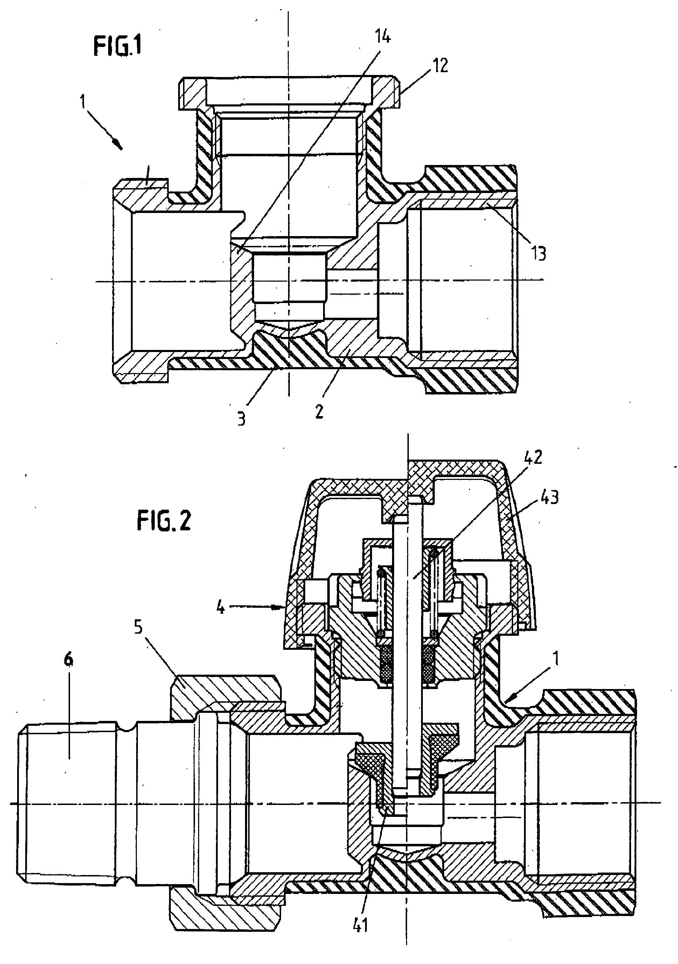

Das in Fig. 1 gezeigte erste erfindungsgemäße Ventilgehäuse hat einen einteiligen Anteil aus Metall und einen einteiligen Anteil aus einem Kunststoff. Der Teil 2 aus Metall bildet einen Kern des Ventilgehäuses, der zumindest teilweise von dem Teil 3 aus Kunststoff auf der Außenseite eingeschlossen ist. Verbindungsmittel wie zum Beispiel Außengewinde 11, 12 und Innengewinde 13 sowie ein Ventilsitz 14 sind in dem Teil 2 aus Metall eingeformt. Die Gewinde 11, 12, 13 sind an Stutzen des Ventilgehäuses vorgesehen, die einerseits einen Zulauf beziehungsweise einen Ablauf des Ventilgehäuses zur Verbindung mit einem Rohrleitungssystem bilden und andererseits zur Aufnahme eines Ventiloberteils vorgesehen sind.

Zur Herstellung des in Fig. 2 dargestellten Ventils ist das Ventilgehäuse 1 mittels einer Überwurfmutter 5, die auf das Außengewinde 11 am ablaufseitigen Stutzen aufgeschraubt ist, mit einem Verbindungsteil 6 für eine Steckverbindung mit einem weiterführenden Leitungsnetz ausgestattet. Ferner ist auf den Stutzen für das Ventiloberteil ein Ventiloberteil 4 aufgesetzt, welches einen Ventilkegel 41 aufweist, welches mit dem Ventilsitz 14 zusammenwirkt. Der Ventilkegel 41 ist über einen Stößel 42 mit einem Drehgriff 43 zur Betätigung des Ventils verbunden.

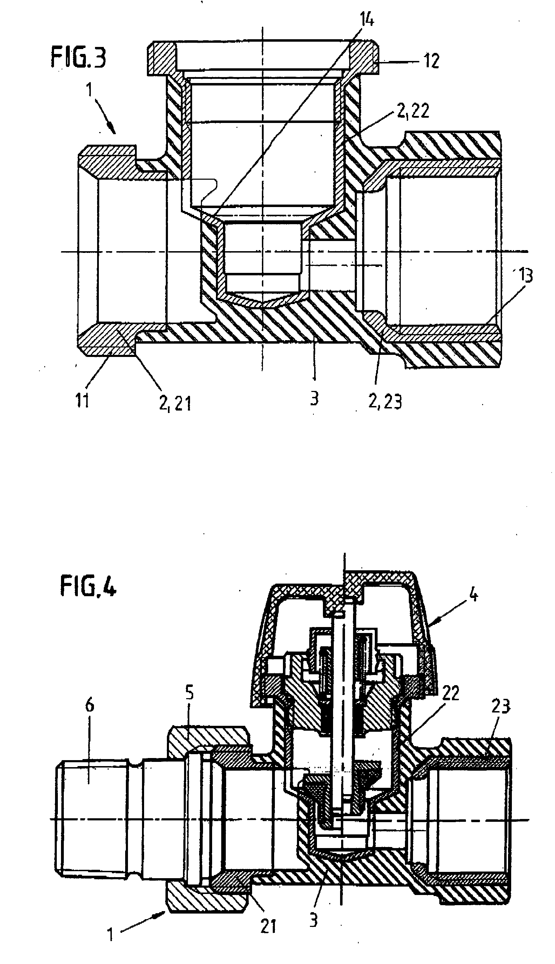

Das Ventiloberteil ist auf ansonsten im Grunde genommen bekannte Art und Weise ausgebildet und nicht näher beschrieben. Das gleiche Ventiloberteil wird auch bei den Ventilen gemäß der Fig. 4 bis 7 eingesetzt.

Das Ventilgehäuse gemäß Fig. 3 unterscheidet sich von dem Ventilgehäuse gemäß Fig. 1 im Wesentlichen dadurch, dass der metallische Anteil des Ventilgehäuses 1 dreiteilig ausgeführt ist. Ein erster Teil 21 umfasst das Ende des ablaufseitigen Stutzens und weist ein Außengewinde 11 zur Verbindung mit einem weiteren Leitungsnetz auf. Ein zweites Teil 22 bildet einen Einsatz, der den Ventilsitz 14 umfasst. Dieses zweite Teil 22 umfasst ferner ein Außengewinde 12 für den Stutzen zur Aufnahme des Ventiloberteils 4. Ein drittes Teil 23 ist am zulaufseitigen Stutzen des Ventilgehäuses 1 vorgesehen und weist ein Innengewinde 13 zum Anschluss des zulaufseitigen Stutzens mit einer zuführenden Leitung auf. Die drei Teile 21, 22, 23 des Metallanteils des Ventilgehäuses 1 sind über den Kunststoffanteil 3 des Ventilgehäuses miteinander fest verbunden. Der Kunststoff ist dazu an die drei Teile angespritzt. Nicht näher dargestellte Strukturen in der Oberfläche der drei Metallteile 21, 22, 23 gewährleisten dabei eine haltbare Verbindung der Metallteile und des Kunststoffteils 3.

Das in Fig. 4 dargestellte Ventil, für welches ein Ventilgehäuse gemäß Fig. 3 verwendet ist, ist mit Ausnahme des Ventilgehäuses 1 genauso ausgebildet wie das Ventil gemäß Fig. 2.

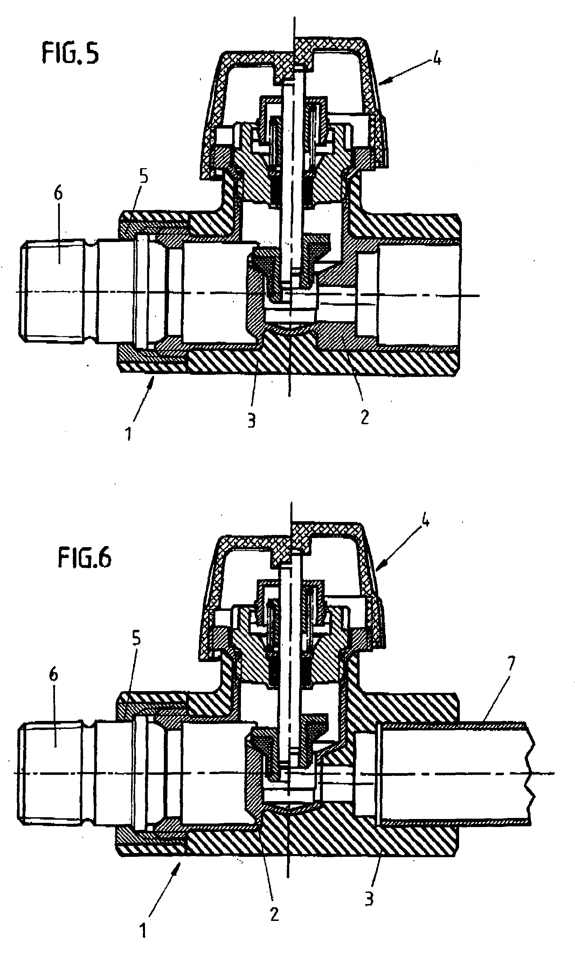

Das in Fig. 5 dargestellte Ventil weist ein Ventilgehäuse auf, welches eine Variante zu dem in Fig. 1 dargestellten Ventilgehäuse ist. Ein Unterschied zwischen dem Ventilgehäuse des dritten Ventils gemäß Fig. 5 und dem Ventilgehäuse gemäß Fig. 1 ist, dass das Ventilgehäuse in einem Bereich zwischen dem zulaufseitigen Stutzen und dem ablaufseitigen Stutzen im Wesentlichen einen gleichförmigen Durchmesser aufweist.

Auch die Verbindung zu einer weiterführenden Leitung ist anders ausgebildet. Zwar ist ebenfalls ein Verbindungselement 6 zur Kupplung mit einer weiterführenden Leitung vorgesehen, das identisch mit dem Verbindungselement des Ventils gemäß Fig. 2 ist, die Verbindung des Verbindungselements 6 mit dem Ventilgehäuse 1 erfolgt jedoch in leicht unterschiedlicher Weise. Eine Überwurfmutter 5, welche das Verbindungsmittel 6 unter Verwendung des Außengewindes 11 mit dem Ventilgehäuse verbindet, weist einen metallischen Kern mit einer Mantelfläche auf, wobei die Mantelfläche der Überwurfmutter mit einer Kunststoffschicht versehen ist. In dem metallischen Anteil ist Innengewinde der Überwurfmutter vorgesehen während der Kunststoffanteil die Außenfläche der Überwurfmutter bildet:

Im Bereich des zulaufseitigen Stutzens ist kein Gewinde zur Verbindung mit einer zuführenden Leitung vorgesehen, vielmehr ist das Ventilgehäuse für eine Steckverbindung mit einer zuführenden Leitung geeignet.

Bei dem in Fig. 6 dargestellten vierten Beispiel für ein erfindungsgemäßes Ventil ist ebenfalls am eingangsseitigen Stutzen eine solche Steckverbindung vorgesehen. Eine zuführende Rohrleitung 7 ist in den eingangsseitigen Stutzen eingesteckt dargestellt.

Im Übrigen unterscheidet sich das Ventilgehäuse des Ventils gemäß Fig. 6 von dem Ventilgehäuse des Ventils gemäß Fig. 5 dadurch, dass im Bereich des zulaufseitigen Stutzens kein Metallteil vorgesehen ist. Das Metallteil ist vielmehr lediglich im Bereich des ablaufseitigen Stutzens, im Bereich des Stutzens für das Ventiloberteil und im Bereich des Ventilsitzes vorgesehen.

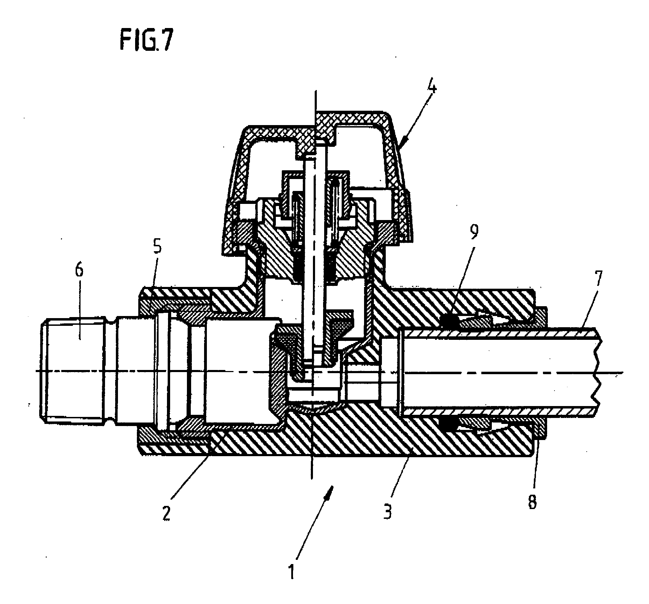

Eine Variante zu dem in Fig. 6 dargestellten Ventil ist in Fig. 7 dargestellt. Hier ist zur Verbindung der zuführenden Leitung 7 ein Nippel 8 mit Tannenbaumstrukturen vorgesehen, der in komplementäre Strukturen im zulaufseitigen Stutzen eingebracht ist, um ein Ausziehen der zuführenden Leitung 7 auf dem Ventilgehäuse 1 zu verhindern. Ein O-Ring 9 dichtet die zuführende Leitung 7 gegen das Ventilgehäuse 1 ab, so dass eine dichte Verbindung zwischen der zuführenden Leitung 7 und dem Ventilgehäuse 1 besteht.

## Patentansprüche

1. Ventilgehäuse für ein Ventil, insbesondere für ein
Thermostatventil,
**dadurch gekennzeichnet,**
**dass** Ventilgehäuse einen Anteil (2) aus Metall und einen Anteil (3) aus Kunststoff umfasst.

2. Ventilgehäuse nach Anspruch 1, **dadurch gekennzeichnet, dass** der Anteil (2) aus Metall aus einem Teil besteht.

3. Ventilgehäuse nach Anspruch 1, **dadurch gekennzeichnet, dass** der Anteil (2) aus Metall aus mehreren Teilen (21, 22, 23) besteht.

4. Ventilgehäuse nach Anspruch 2, **dadurch gekennzeichnet, dass** die verschiedenen Teile (21, 22, 23) des Anteils aus Metall aus einem oder verschiedenen Metallen bestehen.

5. Ventilgehäuse nach einem der Ansprüche 2 bis 4, **dadurch gekennzeichnet, dass** ein oder mehrere Teile der Teile (21, 22, 23) des Anteils aus Metall verschiedene Metallphasen aufweisen.

6. Ventilgehäuse nach einem der Ansprüche 1 bis 5, **dadurch gekennzeichnet, dass** der Anteil (3) aus Kunststoff aus einem Teil besteht.

7. Ventilgehäuse nach einem der Ansprüche 1 bis 5, **dadurch gekennzeichnet, dass** der Anteil (3) aus Kunststoff aus mehreren Teilen besteht.

8. Ventilgehäuse nach Anspruch 7, **dadurch gekennzeichnet, dass** die verschiedenen Teile des Anteils (3) aus Kunststoff aus einem oder verschiedenen Kunststoffen bestehen.

9. Ventilgehäuse nach einem der Ansprüche 6 bis 8, **dadurch gekennzeichnet, dass** ein oder mehrere Teile der Teile des Anteils (3) aus Kunststoff verschiedenen Kunststoffkomponenten aufweisen.

10. Ventilgehäuse nach einem der Ansprüche 1 bis 9, **dadurch gekennzeichnet, dass** der Anteil (3) aus Kunststoff eingefärbt ist.

11. Ventilgehäuse nach einem der Ansprüche 7 bis 10, **dadurch gekennzeichnet, dass** die Teile aus Kunststoff unterschiedlich eingefärbt sind.

12. Ventilgehäuse nach einem der Ansprüche 6 bis 11, **dadurch gekennzeichnet, dass** eine oder mehrere Teile aus Kunststoff transparent sind.

13. Ventilgehäuse nach einem der Ansprüche 1 bis 12, **dadurch gekennzeichnet, dass** der Kunststoffanteil (3) in Abhängigkeit von der Temperatur die Farbe ändert.

14. Ventilgehäuse nach einem der Ansprüche 1 bis 13, **dadurch gekennzeichnet, dass** der Kunststoffanteil (3) den Metallanteil auf der Außenseite und/oder der Innenseite des Ventilgehäuses den Metallanteil vollständig umschließt.

15. Ventilgehäuse nach einem der Ansprüche 1 bis 14, **dadurch gekennzeichnet, dass** Gewinde (11, 12, 13) oder andere Verbindungsmittel oder ein Ventilsitz (14) in dem Anteil (2) des Ventilgehäuses aus Metall vorgesehen sind.

16. Ventilgehäuse nach einem der Ansprüche 1 bis 15, **dadurch gekennzeichnet, dass** in dem Anteil (2) aus Metall Strukturen vorgesehen sind, in den Kunststoff des Kunststoffanteils eingespritzt ist.

17. Ventil insbesondere Thermostatventil, **dadurch gekennzeichnet, dass** das Ventil ein Ventilgehäuse nach einem der Ansprüche 1 bis 16 aufweist.
